Europäisches Patentamt

(19) European Patent Office

Office européen des brevets

(11) Numéro de publication: **0 1 13 285**
**B1**

(12) **FASCICULE DE BREVET EUROPÉEN**

(45) Date de publication du fascicule du brevet:
**17.09.86**

(51) Int. Cl.⁴: **E 21 B 47/10,** E 21 B 47/06, G 01 F 1/68

(21) Numéro de dépôt: **83402496.0**

(22) Date de dépôt: **21.12.83**

(54) Procédé et dispositif pour déterminer les caractéristiques d'écouiement d'un fluide dans un puits à partir de mesures de températures.

(30) Priorité: **30.12.82 FR 8222100**

(43) Date de publication de la demande:
**11.07.84 Bulletin 84/28**

(45) Mention de la délivrance du brevet:
**17.09.86 Bulletin 86/38**

(84) Etats contractants désignés:
**DE FR GB IT NL SE**

(56) Documents cités:
**US - A - 2 697 941**
**US - A - 3 011 342**
**US - A - 3 410 136**
**US - A - 3 913 398**

(73) Titulaire: **SOCIETE DE PROSPECTION ELECTRIQUE SCHLUMBERGER, 42, rue Saint-Dominique, F-75340 Paris Cedex 07 (FR)**

(84) Etats contractants désignés: **FR IT**

(73) Titulaire: **Schlumberger Limited, 277 Park Avenue, New York, N.Y. 10172 (US)**

(84) Etats contractants désignés: **DE GB NL SE**

(72) Inventeur: **Coblentz, Andréa, 42, rue Vaneau, F-75007 Paris (FR)**
Inventeur: **Colombani, Pascal, 7388 South Forest Court, Littletown Colorado 80122 (US)**
Inventeur: **Lefevre, Didier, 5, les Nouveaux Horizons, F-78310 Elancourt (FR)**
Inventeur: **Meunier, Denis, 1, rue Gutenberg, F-75001 Paris (FR)**

(74) Mandataire: **Chareyron, Lucien et al, Schlumberger Limited Service Brevets c/o Giers 12, place des Etats Unis B.P. 121, F-92124 Montrouge Cédex (FR)**

ACTORUM AG

## Description

L'invention concerne l'étude des caractéristiques d'écoulement d'un fluide dans un puits, plus particulièrement dans les zones du puits où une circulation de fluide se produit entre les formations géologiques et le puits traversées par le puits, telles que les zones productrices dans les puits producteurs d'hydrocarbures.

Le débit du fluide s'écoulant dans un puits peut être mesuré au moyen d'une sonde de débit suspendue à l'extrémité d'un câble. En déplaçant la sonde le long du puits, on obtient une diagraphie de débit indiquant le débit en fonction de la profondeur. Dans le cas d'un puits producteur, l'examen de cette diagraphie permet de déterminer le débit des fluides dans le puits, le débit des fluides entrant dans le puits dans les différentes zones productrices, et donc d'évaluer les rendements respectifs de ces différentes zones.

Les sondes de débit utilisées habituellement sont des dispositifs à turbine qui ne founissent des mesures précises que si l'écoulement est stable. Or l'entrée dans le puits des fluides provenant de la formation perturbe considérablement l'écoulement, les perforations pratiquées dans le tubage du puits pour permettre l'entrée des fluides étant dirigées radialement par rapport à l'axe du puits. On constate de façon générale que les sondes de débit ne réagissent qu'avec un certain retard à l'entrée de fluides dans le puits.

Lorsque la séparation entre zones productrices consécutives est suffisante pour que l'écoulement puisse se stabiliser, la sonde de débit fournit des mesures précises, et le débit des différentes zones productrices peut être évalué correctement. Mais si la séparation entre zones productrices est insuffisante pour permettre à l'écoulement de se stabiliser, les mesures fournies par la sonde de débit sont imprécises et ne permettent pas en tout cas d'évaluer individuellement le rendement des différentes zones productrices.

Un autre approche repose sur la relation qui existe entre le débit et la température du fluide dans le puits. Considérons le cas d'un puits producteur de pétrole. La température des formations, et donc du liquide de formation, croît avec la profondeur selon le gradient géothermique. Si l'on suppose que l'équilibre thermique est réalisé entre le liquide dans le puits et les formations environnantes, la température dans le puits suit la même variation géothermique. Mais du fait de l'inertie thermique du fluide entrant dans le puits et s'écoulant vers la surface, la température dans le puits au-dessus du point d'entrée est portée à une température supérieure à la température correspondant à la variation géothermique. La décroissance de la température est donc plus lente que le gradient géothermique et une certaine distance est nécessaire pour qu'elle revienne à la valeur géothermique.

Le brevet US-A-3 913 398 (Curtis) utilise un modèle selon lequel la courbe de température au-dessus d'une zone de production se rapproche de façon exponentielle d'une asymptote parallèle au gradient géothermique. La distance de relaxation intervenant dans l'exponentielle est un paramètre qui dépend de la densité, de la chaleur spécifique et du débit massique du fluide ainsi que du temps pendant lequel le puits a produit. L'examen du profil de température permet d'identifier les intervalles présentant l'allure d'une exponentielle. On ajuste par itération la distance de relaxion jusqu'à ce que le profil de température déterminé sur la base du modèle corresponde au profil mesuré. La valeur obtenue pour la distance de relaxation est alors utilisée pour calculer le débit massique et, connnaissant la densité du fluide, le débit volumétrique.

Cette technique est intéressante en combinaison avec une mesure de débit en particulier pour déceler les écoulements de fluide à l'extérieur du tubage du puits. La sonde de débit n'est en effet sensible qu'à l'écoulement dans le puits, alors que la mesure de température est influencée par tous les types d'écoulement, qu'ils aient lieu à l'intérieur ou à l'extérieur du puits.

Toutefois, cette technique repose sur des hypothèses qui s'écartent souvent de façon notable des conditions réelles. Elle suppose en particulier que la séparation entre zones productrices soit assez grande, au minimum d'une trentaine de mètres, et que sur l'intervalle qui part d'un point d'entrée de fluide, le gradient géothermique et les propriétés de transfert thermique soient constants. En fait, le gradient géothermique ne reste constant que sur de faibles intervalles correspondant à une formation uniforme, et les caractéristiques de transfert thermique peuvent également varier avec l'état du puits (diamètre du tubage, qualité de la cimentation entre le tubage et la formation).

Il est fréquent en pratique que plusieurs zones productives d'épaisseur limitée se succèdent avec des intervalles très courts, de l'ordre de quelquel mètres. Dans ce cas, la technique du brevet cité fournira le débit total de l'ensemble des zones productives, mais ne permettra pas d'évaluer les contributions respectives des différentes zones.

Selon l'invention, on mesure avec une sonde de diagraphie la température de long d'un intervalle de profondeur comprenant des zones de circulation de fluide entre les formations et le puits, on mesure le débit aux extrémités de cet intervalle, et on détermine pour chaque profondeur, à partir des températures mesurées et desdits débits, une valeur de débit, l'ensemble des valeurs ainsi obtenues étant enregistré sous la forme d'un profil de débit synthétique.

L'invention repose sur une relation entre la température $T$ à une profondeur $z$ et le débit à la même profondeur. Cette relation est déduite de l'analyse des transferts thermiques sur un petit intervalle $dz$, et consiste en une équation différentielle du premier ordre reliant le débit et sa dérivée à des grandeurs pouvant être déduites du profil de température, à savoir la température et sa dérivée, et à la température $T_e$ du fluide dans la formation, cette température $T_e$ variant comme le gradient géothermique.

De façon appropriée, on résout par itération l'équation différentielle, la grandeur itérante étant la température $T_e$, en imposant des solutions au sommet et au bas de l'intervalle de profondeur considéré égales aux débits mesurés à ces profondeurs. On obtient ainsi une valeur de débit à chaque profondeur dudit intervalle. La valeur de convergence de la température $T_e$ permet en outre de déduire le gradient géothermique, à titre d'information complémentaire.

Le profil de débit synthétique ainsi obtenu permet d'analyser avec précision les contributions des différentes zones productrices dans le cas d'un puits producteur. Il remédie par conséquent aux insuffisances de la sonde de débit dans les zones perturbées.

Une manière simple de mesurer le débit est de combiner une sonde de débit à la sonde de température.

L'invention sera bien comprise à la lecture de la description ci-après, faite en référence aux dessins annexés.

Dans les dessins:

la figure 1 représente schématiquement un appareil de diagraphie dans un puits producteur de pétrole,

la figure 2 illustre sous forme de diagramme le traitement permettant d'obtenir un profil de débit synthétique à partir des mesures fournies par l'appareil de la figure 1,

les figures 3a, 3b donnent des exemples de tels profils de débit synthétiques comparés aux profils de débit mesurés.

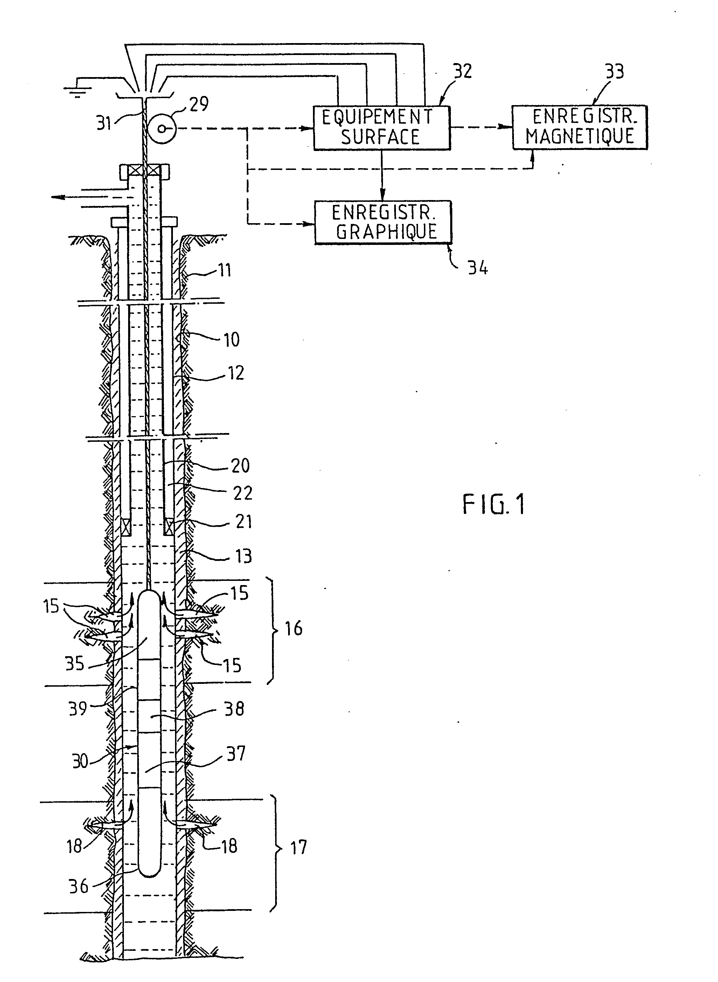

La figure 1 représente un forage 10 traversant des formations 11 et dans lequel on a placé un tubage 12. L'espace entre le tubage et les parois du forage a été rempli avec du ciment 13. Une série de perforations telles que 15 ont été pratiquées dans une zone productrice 16 pour permettre au fluide présent dans cette zone de s'écouler dans le puits. De même, on a représenté une seconde zone productrice 17 et la série de perforations 18 correspondante.

Au-dessus des zones productrices est disposée à l'intérieur du tubage une colonne de production 20, avec un bouchon (packer) 21 fermant l'espace 22 entre la colonne de production et le tubage pour contraindre le fluide produit à s'écouler à l'intérieur de la colonne de production.

La figure 1 montre schématiquement un appareil de diagraphie comprenant un dispositif de fond 30 suspendu à un câble électrique 31 et reliée par ce câble à un équipement de surface 32. L'équipement de surface comprend un treuil, non représenté, pour l'écoulement du câble, et fournit la puissance électrique et les signaux de commande nécessaires au fonctionnement du dispositif de fond. Les signaux de mesure fournis par le dispositif de fond sont enregistrés au moyen d'un enregistreur à bande magnétique 33 et d'un enregistreur graphique 34 associés à l'équipement de surface. De façon classique, des signaux indicatifs de la profondeur du dispositif de fond sont fournis par un dispositif 29 associé au treuil, qui mesure le déplacement du câble. Ces signaux permettent d'associer une profondeur à chaque valeur de mesure produite par le dispositif de fond.

Le dispositif de fond comprend un ensemble de sondes placées bout à bout et sensibles à différentes caractéristiques, et une cartouche de télémétrie 35 assurant l'interface entre les sondes et le câble 31.

Un ensemble de sondes typiques comprend une sonde de débit 36 sensible à la vitesse d'écoulement du fluide, par exemple un débitmètre à turbine tel que décrit dans le brevet US-A-3 954 006, une sonde 37 sensible à la densité du fluide telle que le gradiomanomètre décrit dans le brevet US-A-3 455 157, une sonde de température 38 et un dispositif 39 détectant les joints du tubage.

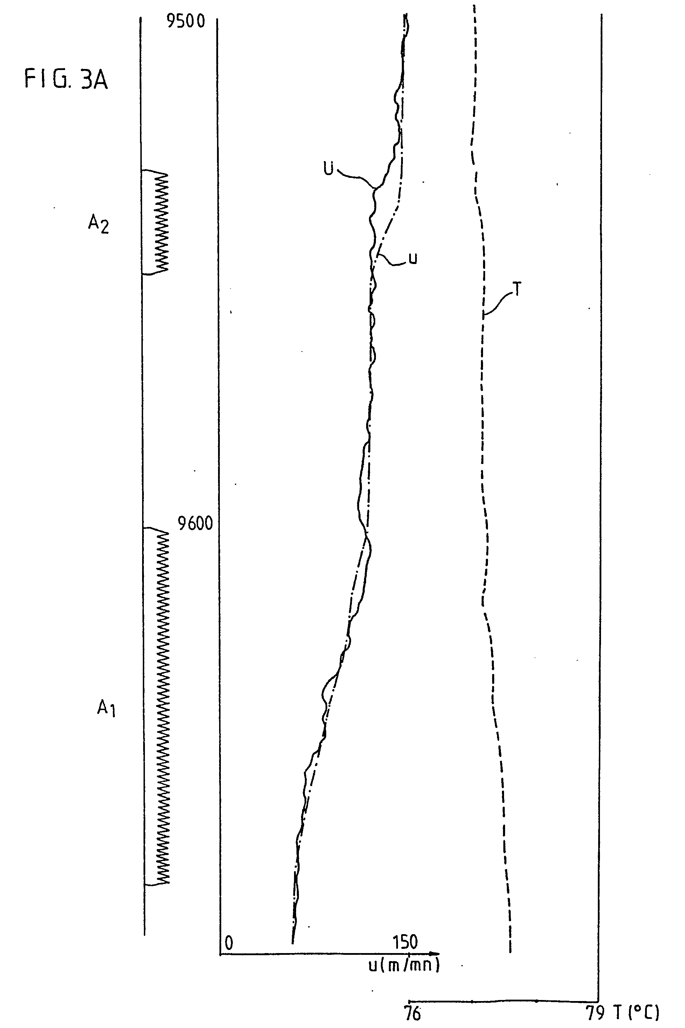

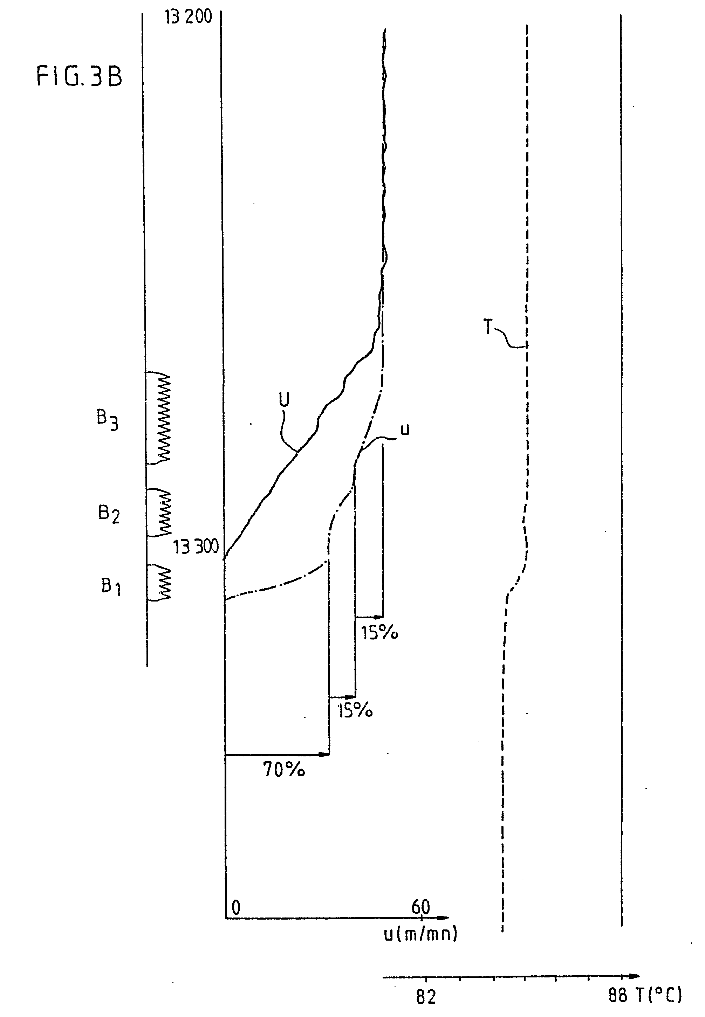

Il est connu que les sondes de débit ne fournissent des mesures précises que si l'écoulement est relativement stable. En face des perforations 15, 18, les mesures de débit sont faussées par les perturbations dues à l'entrée radiale des fluides dans le puits. Des exemples en sont fournis par les diagrammes de débit des figures 3a, 3b. Sur toutes ces figures, la profondeur est en ordonnée et le débit est en abscisse, le profil de débit tel qu'il est fourni par la sonde de débit étant représenté en trait plein.

Sur tous ces diagrammes, on a indiqué les profondeurs en pieds, et chaque graduation représente deux pieds, soit environ 63 cm.

Sur la figure 3a, on note deux zones productives $A_1$ et $A_2$. La zone $A_1$ s'étend de la cote 9670 à la cote 9600, c'est-à-dire sur environ 22 m. La zone $A_2$ s'étend de la cote 9550 à la cote 9590, donc sur 6,5 m. On note que la sonde de débit ne réagit qu'avec un retard très net à l'entrée de fluide par les perforations. Dans le cas de la zone $A_2$, on n'observe un accroissement significatif du débit que près du sommet de cette zone, environ 5 m au-dessus du bas de la zone.

La figure 3b montre un autre exemple, avec trois zones productives $B_1$, $B_2$, $B_3$ séparées par des intervalles très courts. La production de la zone inférieure $B_1$ n'est prise en compte qu'une fois dépassé le sommet de cette zone. Ce retard peut être imputable en partie à un calage en profondeur défectueux du profil de débit. Mais quoi qu'il en soit, le profil de débit de la figure 3b ne permet pas de déterminer les contributions respectives des zones $B_1$, $B_2$ et $B_3$.

La relation, indiquée plus haut, entre le débit et la température du fluide qui s'écoule dans le puits est mise à profit de la manière expliquée ci-après pour produire un profil de débit synthétique reflétant de façon plus précise et sans retard les échanges de fluide entre le puits et les formations.

Considérons un volume dans le puits où un échange de fluide se produit entre le puits et la formation.

Appelons z la profondeur, T la température du fluide qui s'écoule, $T_e$ la température du fluide dans la formation, $T_f$ la température du fluide entrant dans le puits, $T_h$ la température à l'interface entre la formation et le ciment 13 entourant le tubage 12 du puits, et u le débit.

Le principe de conservation de l'énergie conduit à la relation:

$$\frac{dT}{dz} = \frac{4U}{D\rho c_p}\frac{T-T_h}{u} + \left(\frac{dT}{dz}\right)_f - (T-T_f) - \frac{1}{u}\frac{du}{dz} \qquad (1)$$

Dans cette relation

U signifie le coefficient de transfert thermique entre le puits et la formation

D est le diamètre intérieur du tubage,

est la densité du fluide

cp est sa capacité calorifique

Le terme

$$\frac{4U}{D\rho c_p} \cdot \frac{T - T_h}{u}$$

correspond à l'échange thermique entre le fluide qui s'écoule et la formation, dû à la différence entre la température T du fluide et la température $T_h$.

Le terme $\left(\dfrac{dT}{dz}\right)_f$ dépend de la phase du fluide.

Son expression complète est

$$\left(\frac{dT}{dz}\right)_f = T\left(\frac{\delta(1/\rho)}{\delta T}\right)_p \frac{dP}{dz} + \frac{dF}{dz} \qquad (2)$$

Le premier terme est imputable aux effets de dilation du fluide. Il est négligeable pour un liquide, et peut être déduit de l'équation d'état pour un gaz.

Le second terme dF/dz représente la chaleur résultant du frottement du fluide sur les parois du tubage. Ce terme vaut

$$\frac{dF}{dz} = \frac{1}{2} \cdot \frac{fu^2}{D} \qquad (3)$$

où f est le coefficient de frottement et D le diamètre intérieur du tubage.

Le troisième terme

$$- (T - T_f) \frac{1}{u} \frac{du}{dz}$$

exprime la variation de température due à l'échange de fluide entre la formation et le puits. Ce terme est nul dans les zones stationaires où aucun échange de fluide ne se produit, car alors du/dz est nul.

Dans le cas où le fluide produit est un liquide, la température d'entrée $T_f$ peut être remplacée par la température $T_e$ dans la formation.

Dans le cas où il s'agit d'un gaz, les températures $T_e$ et $T_f$ sont habituellement différentes, car le gaz se dilate à l'entrée dans le puits du fait de la différence $\triangle P$ entre la pression de la formation et la pression du puits, et cette dilatation s'accompagne d'une variation de température par effet de Joule-Thomson. On a alors

$$T_f - T_e = - \eta \triangle P \qquad (4)$$

Le coefficient de Joule-Thomson $\eta$ est habituellement positif, auquel cas le gaz se refroidit en entrant dans le puits.

La résolution de l'équation différentielle (1) en vue de déterminer, pour chaque profondeur une valeur de débit u à partir de la température mesurée T, exige la connaissance d'un grand nombre de paramètres dont beaucoup sont en fait difficiles à évaluer avec une précision suffisante.

Ainsi, le coefficient de transfert thermique U, exprime la résistance au transfert thermique offerte par le fluide dans le puits, le tubage et la couche de ciment. Il est donc lui-même fonction de nombreux paramètres (conductivité thermique et épaisseur des différentes couches).

La température $T_h$ à l'interface ciment-formation diffère de la température $T_e$ du fluide dans la formation entre le fluide dans le puits et la formation. L'équilibre thermique est très long à s'établir après la mise en production du puits. Par conséquent, la différence de température $T_h - T_e$ dépend du temps pendant lequel le puits a produit, et également de la diffusivité et de la conductivité thermiques de la formation, quantités mal connues.

Une autre difficulté réside dans la détermination de l'équation d'état, lorsque le fluide est un gaz ou un mélange gaz-liquide. Les équations réellement représentatives pour les hydrocarbures sont des équations empiriques qui exigent la connaissance de la composition du mélange.

Une approche qui permet d'éliminer tous ces paramètres difficiles à estimer consiste à considérer globalement les deux premiers termes de l'équation (1) comme la partie $(dT/dz)_s$ du gradient de température total non imputable aux échanges de fluide. Dans une zone stationnaire, ainsi qu'on l'a vu, le troisième terme de l'équation (1) est nul (du/dz = 0); la somme des deux premiers termes est donc égale au gradient de température total dans une zone stationnaire. Cette quantité peut être déduite facilement du profil de température mesuré, une fois identifié une zone où le gradient de température est constant sur un intervalle de profondeur suffisant.

L'équation (1) devient alors, dans le cas d'une production de liquide $(T_f = T_e)$:

$$\frac{du}{dz} = u \frac{\left(\dfrac{dT}{dz}\right) - \left(\dfrac{dT}{dz}\right)_s}{T - T_e} \qquad (5)$$

Avec cette approche, la seule grandeur qui ne se déduise pas directement du profil de température est la température $T_e$ du fluide dans la formation.

La température $T_e$ suit le gradient géothermique mais même si on peut supposer que celui-ci est constant sur l'intervalle de profondeur considéré, sa valeur est mal connue. La technique utilisée pour faire face à cette difficulté consisite à intégrer l'équation (5) par itération, la grandeur itérante étant $T_e$, en imposant des solutions aux extrémités de l'intervalle égales aux valeurs que fournit la sonde de débit pour les mêmes profondeurs.

En résumé le traitement conduisant à un profil de débit synthétique nécessite en plus du profil de température, la connaissance des valeurs de débit aux extrémités de l'intervalle de profondeur que l'on considère.

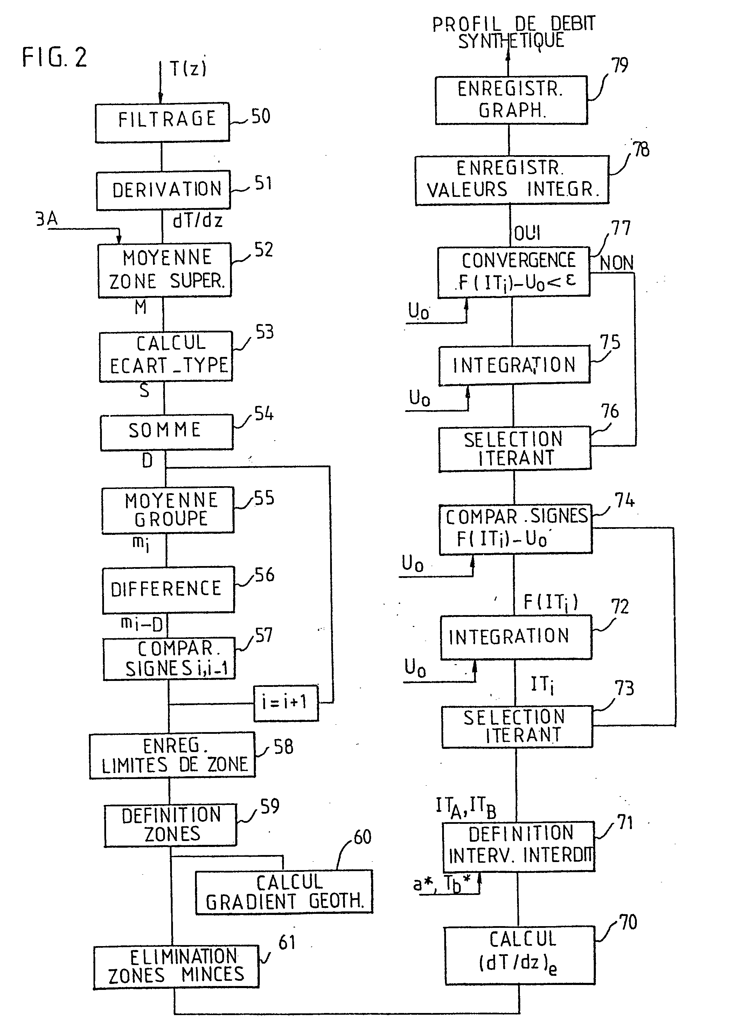

Ce traitement, exécuté sur un calculateur numérique programmé, comprend les phases ci-après, schématisées sur la figure 2.

Le profil de température mesuré et enregistré se compose d'une série de valeurs discrètes, avec un point de mesure tous les 15 cm.

On procède tout d'abord à un filtrage (bloc 50) du profil de température pour éliminer des petites variations dues au bruit. Le filtrage peut consister de façon appropriée à convoluer le profil de température chaque fois sur une fenêtre donnée, par exemple représentant 20 points de mesure, avec une fonction triangle.

L'étape suivante est la dérivation (bloc 51) du profil de température filtré, qui fournit en chaque point la grandeur $dT/dz$ (gradient de température total).

L'analyse du gradient permet de délimiter les zones stationnaires, où ce gradient est constant au bruit près et a une valeur nettement plus faible que devant les entrées de fluide. Les zones d'entrée de fluide sont définies comme les zones non stationnaires.

Pour cette analyse, on considère tout d'abord la zone s'étendant d'une profondeur $z_A$ située à une certaine distance (par exemple 1,5 m) au-dessus de la plus haute des perforations jusqu'à l'extrémité supérieure, de profondeur $z_h$, de l'intervalle dans lequel la température a été mesurée. Les profondeurs des différentes perforations étant connues, la cote $z_A$ est facile à déterminer.

On calcule la moyenne M de la dérivée $dT/dz$ sur cette zone $(Z_A, z_h)$ (bloc 52).

On détermine ensuite (bloc 53) l'écart-type s de la dérivée $dT/dz$ sur tout l'intervalle de mesure, soit de la cote $z_b$ à la cote $z_h$, pour avoir une estimation du bruit sur l'ensemble de l'intervalle, et on calcule la somme $D = M + s$ (bloc 54).

On calcule la moyenne m de la dérivée $dT/dz$ (bloc 55) sur n points de mesure consécutifs (avec par exemple n = 4), et on compare cette moyenne m à la valeur D (bloc 56). Si m est inférieur à D, la zone correspondante est considérée comme appartenant à une zone stationnaire. On procède à cette comparaison pour tous les groupes de n points.

La comparaison est faite en suivant l'ordre des profondeurs, du haut vers le bas. Pour chaque groupe d'ordre i, après la comparaison de sa moyenne $m_i$ avec D, on compare le signe de la différence $m_i - D$ avec le signe de la différence $m_{i-1} - D$ relative au groupe précédent d'ordre i-1 (bloc 57).

Si les signes sont les mêmes, les deux groupes appartiennent à la même zone (stationnaire ou non stationnaire). S'ils sont différents, les deux groupes appartiennent à des zones différentes, et le groupe de signe positif est identifié comme une limite d'une zone non stationnaire. Si le groupe i-1 donne un signe négatif et le groupe i un signe positif, la limite définira le front de montée d'un pic sur la courbe $f(z) = dT/dz$, un tel pic étant imputable à une entrée de fluide. Dans le cas inverse, il s'agira du front descendant d'un tel pic. Les limites ainsi déterminées, complétées d'un code «front de montée» ou «front de descente», sont enregistrées dans le bloc 58.

Une zone d'entrée de fluide est identifiée lorsqu'un front de montée, puis un front de descente ont été trouvés (bloc 59).

Lorsqu'on analyse de cette façon la zone à l'extrémité inférieure de l'intervalle, on peut trouver un front de montée indiquant la fin d'une zone stationnaire, mais aucun front de descente. Cela signifie que la zone en question suit le gradient géothermique, qui est plus important que le gradient dans les zones stationnaires situées entre des zones d'entrée de fluide ou au-dessus de ces zones. Dans ce cas, on calcule (bloc 60) la moyenne de la dérivée $dT/dz$ dans cette zone. Cette moyenne peut être utilisée dans les phases ultérieures du traitement en tant que valeur du gradient géothermique.

Lorsque ces opérations ont été effectuées sur l'ensemble de l'intervalle, qui se trouve ainsi fractionné en zones d'entrée de fluide et zones stationnaires (avec éventuellement une zone géothermique au bas de l'intervalle), on élimine (bloc 61) les zones stationnaires trop fines, par exemple qui représentent moins de deux points de mesure (30 cm).

L'identification des zones d'entrée de fluide et des zones stationnaires permet ensuite de calculer (bloc 70) pour chaque profondeur l'expression

$$\left(\frac{dT}{dz}\right)_e = \left(\frac{dT}{dz}\right)\left(\frac{dT}{dz}\right)_s$$

figurant au numérateur dans l'équation (5), expression qui correspond au gradient de température imputable aux seules entrées de fluide.

On examine tout d'abord si la profondeur considérée se trouve dans une zone stationnaire ou dans une zone d'entrée de fluide, par comparaison avec les limites des zones telles que déterminées ci-dessus. Si l'on se trouve dans une zone stationnaire, $(dT/dz)_e$ est en principe voisin de zéro. On calcule sa valeur en prenant pour valeur de $(dT/dz)_s$ la moyenne, sur la zone stationnaire considérée, du gradient $(dT/dz)$ résultant de la mesure.

Dans les zones d'entrée de fluide, on préfère prendre en considération les moyennes de $(dT/dz)$ dans les deux zones stationnaires entourant la zone d'entrée de fluide considérée, et prendre pour valeur de $(dT/dz)_s$ l'interpolation linéaire entre ces deux moyennes.

Une fois calculé le terme $(dT/dz)_e$ sur l'ensemble de l'intervalle, il reste à intégrer l'équation différentielle (5).

Comme expliqué plus haut, la façon dont la température $T_e$ dans l'équation (5) varie avec la profondeur est mal connue, et on intègre l'équation différentielle (5) de façon itérative, avec $T_e$ comme grandeur itérante. L'intégration (bloc 72) fournit un ensemble de valeurs de débit u(z) pour chaque profondeur z correspondant à une mesure de température.

L'ensemble de valeurs retenu est celui pour lequel la valeur de débit $u_h$ au sommet de l'intervalle de profondeur considéré est égale à la valeur $U_o$ mesurée par la sonde de débit au même niveau (ou du moins ne diffère de $U_o$ que d'une quantité inférieure à une valeur déterminée).

La température $T_e$ peut être exprimée par

$$T_e = T_b - az$$

$T_b$ étant la température du fluide dans la formation au bas de l'intervalle considéré et a le gradient géothermique dans cet intervalle.

L'itération peut porter soit sur la température $T_b$, soit sur le gradient géothermique a.

On prend comme estimation $T_b^*$ de $T_b$ la température au sommet de la zone géothermique, identifiée par l'analyse exposée ci-dessus. Si l'analyse n'a pas permis de déceler une zone géothermique, on prend, à défaut, la température au bas de l'intervalle.

Pour le gradient géothermique, on prend comme estimation la valeur déduite de l'analyse des zones ci-dessus, ou à défaut, une valeur donnée au départ qui repose sur les informations géologiques disponibles.

Lorsque l'itération porte sur la température $T_b$, on fixe le gradient à la valeur $a^*$ et $T_e$ s'écrit:

$$T_e = T_b^* + DT_b - a^* \cdot z$$

l'itérant étant $DT_b$.

Lorsque l'itération porte sur le gradient, $T_e$ s'écrit

$$T_e = T_b^* - (a^* + Da)z$$

l'itérant étant $Da$.

Le choix du mode d'itération est à fixer au départ.

Si l'on appelle IT l'itérant, qu'il s'agisse de l'itération sur la température ou sur le gradient, le processus itératif consiste à arriver à la valeur $IT_f$ telle que $F(IT_f) = U_o$, où F est le résultat de l'intégration de l'équation (5) au sommet de l'intervalle de profondeur considéré.

Il faut noter tout d'abord que la valeur $u_b$ au bas de l'intervalle ne doit pas être nulle, car le modèle décrit plus haut n'autorise pas une valeur de débit nulle. Si, comme il est habituel, le bas de l'intervalle est plus profond que la zone de production la plus profonde, ou correspond au tout début de cette zone, la valeur mesurée par la sonde de débit sera nulle. Dans ce cas, on choisira une valeur $u_b$ très faible, égale par exemple à 1 % de la valeur U mesurée au sommet.

Une étape préalable du processus itératif (bloc 71) consiste à déterminer les intervalles de valeurs autorisées pour IT. Comme $T_e$ est présent au dénominateur dans l'équation (5), il faut interdire toutes les valeurs de IT qui annulent le dénominateur. Ces valeurs, pour des valeurs données des paramètres $T_b$ et a, dépendent des valeurs prises par la température mesurée T. Ces valeurs constituent un ensemble discret de valeurs qu'on peut assimiler à un intervalle continu. On en déduit l'intervalle interdit pour IT ($ITa$, $ITb$) et ses compléments, à savoir les deux intervalles autorisés $I_1(-\infty, ITa)$ et $I_2(ITb, +\infty)$.

Ensuite, le processus itératif proprement dit peut se dérouler. On sait que l'équation

$$F(IT) — U_o = 0$$

a une solution unique $IT_f$, cette solution pouvant se trouver d'un côté ou de l'autre de l'intervalle interdit.

Le processus itératif se déroule en fait en deux étapes, la première permettant d'identifier l'intervalle où se situe la solution et la seconde permettant d'arriver à la convergence.

La première étape prend fin lorsqu'on a détecté le premier changement de signe de la fonction

$$F(IT) - U_o$$

par rapport à un signe de référence. Le signe de référence correspond à une valeur de l'itérant $IT_o$ située dans l'un des intervalles autorisés et très éloignée de la limite. Par exemple on prend $IT_o = ITa + K$ $ITa - ITb$, K étant très grand.

Les valeurs successives de l'itérant sont alors définies comme suit (bloc 73). On effectue une itération avec une valeur $IT_1$ située dans l'autre intervalle $I_2$, également éloignée de la limite $ITb$, et on poursuit en changeant chaque fois d'intervalle avec des valeurs $IT_2$, etc... plus proches des limites $ITa$ et $ITb$, par exemple $IT_2 = ITa + K/n$ $ITa - ITb$, avec n = 10. A chaque itération, le signe de la valeur $F(IT_i) - U_o$ est comparé au signe de référence (bloc 74). La première valeur d'itérant donnant un changement de signe appartient à l'intervalle où se situe la solution.

Dans la seconde étape, l'intégration se fait de la même façon (bloc 75) mais l'itérant est défini (bloc 76) selon l'un quelconque des procédés classiques à une fonction convexe sur un intervalle. L'itération est poursuivie jusqu'à la convergence, c'est-à-dire jusqu'à ce que la différence $F(IT) - U_o$ devienne inférieure à une quantité déterminée $\varepsilon$ (bloc de comparaison 77).

L'ensemble des valeurs de débit $u(z)$ correspondant à la convergence sont enregistrées (bloc 78) en vue de l'obtention d'un profil de débit synthétique (bloc 79).

Sur la figure 3a, le profil de température est représenté en trait pointillé, et le profil de débit synthétique résultant du traitement exposé ci-dessus est en trait mixte. On note que le profil synthétique donne une image bien plus précise des entrées de fluide que le profil mesuré. En particulier, les entrées dans la zone supérieure $A_2$ sont prises en compte sans retard.

L'exemple de la figure 3b est encore plus net. Le profil synthétique permet d'évaluer les contributions individuelles des trois zones $B_1$, $B_2$, $B_3$ comme étant respectivement de 70 %, 15 % et 15 %. Une telle évaluation n'était pas possible à partir du profil mesuré.

Il est à noter que le procédé décrit ci-dessus est capable de fournir une valeur du gradient géothermique, si l'itération porte sur ce gradient. Pour cela, on modifiera l'estimation $a^*$ avec la valeur $\triangle a$ correspondant à la convergence.

Une variante au procédé décrit plus haut consiste à diviser l'intervalle total de mesure en plusieurs zones pour l'exécution du processus itératif. On prend alors comme valeurs de débit imposées les valeurs mesurées par la sonde de débit au bas et au sommet de chaque zone.

Le traitement commence par la zone la plus profonde et continue dans le sens des profondeurs décroissantes. Pour la zone $Z_1$ la plus profonde, le traitement est identique à ce qui a été décrit, à ceci près que la valeur imposée U est la valeur de débit mesurée au sommet de cette zone.

Pour la zone suivante $Z_2$, on doit tenir compte du fait que la température mesurée au bas de la zone n'est plus du tout une estimation appropriée de la température $T_e$ du fluide dans la formation. On prend alors, comme estimation $T_b^*$ pour la zone $Z_2$, la valeur de $T_e$ au sommet de la zone $Z_1$, cette valeur étant calculée avec la valeur finale $IT_f$ de l'itérant.

Le même traitement s'applique successivement pour les zones suivantes.

Dans le cas d'un puits producteur de gaz, il faut appliquer la correction liée à l'effet Joule-Thompson. Le coefficient de Joule-Thompson η et la différence des pression $\triangle P$ sont des paramètres que l'on peut considérer comme constants sur toute la hauteur de l'intervalle de mesure, et qu'il n'est pas difficile de déterminer.

Cette correction est également à appliquer lorsqu'une entrée de gaz se produit dans un puits producteur de pétrole. Les zones d'entrée de gaz peuvent être identifiées facilement par le profil de densité fourni par le gradiomanomètre. En effet, l'entrée de gaz dans le puits se traduit par une forte chute de la densité.

**Revendications**

1. Procédé pour déterminer le débit de fluide dans un puits, le long d'un intervalle comprenant des zones d'échange de fluide entre le puits et les formations, caractérisé par le fait que l'on mesure au moyen d'une sonde de diagraphie la température du fluide le long de cet intervalle, on mesure le débit au moins aux extrémités de cet intervalle, et on détermine pour chaque profondeur, à partir des températures mesurées et des débits mesurés, une valeur de débit, l'ensemble des valeurs obtenues étant enregistré sous la forme d'un profil de débit synthétique.

2. Procédé selon la revendication 1, caractérisé par le fait que le profil de débit synthétique est obtenu par intégration sur le dit intervalle d'une équation différentielle reliant, pour chaque profondeur, le débit à la température du fluide et à la température $T_e$ du fluide dans la formation, la résolution étant faite par itération, avec la température $T_e$ en tant que grandeur itérante, le processus d'itération reposant sur la comparaison de la valeur résultant de l'intégration sur l'ensemble de l'intervalle avec la valeur de débit mesurée au sommet de l'intervalle.

3. Procédé selon la revendication 2, caractérisé par le fait que, si le débit mesuré est nul au bas de l'intervalle, la valeur de départ pour l'intégration est choisie comme une petite fraction de la valeur de débit mesurée au sommet de l'intervalle.

4. Procédé selon l'une des revendications 2 et 3, caractérisé par le fait que, pour un liquide, l'équation différentielle s'écrit sour la forme

$$\frac{du}{dz} = u \frac{\left(\dfrac{dT}{dz}\right) - \left(\dfrac{dT}{dz}\right)_s}{T - T_e}$$

u étant le débit, T la température du fluide mesurée, $T_e$ la température du fluide dans la formation et $(dT/dz)_s$ le gradient de température dû au transfert thermique entre le puits et la formation, ce gradient étant déterminé à partir des mesures de température dans les zones du dit intervalle où aucun échange notable de fluide ne se produit.

5. Dispositif pour déterminer le débit de fluide dans un puits, le long d'un intervalle comprenant des zones d'échange de fluide entre le puits et les formations (11), comprenant des moyens (38) pour mesurer la température du fluide le long de cet intervalle, des moyens (36) pour mesurer le débit au moins aux extrémités de cet intervalle, caractérisé en ce qu'il comprend en outre des moyens (32-34; 50-61; 70-79) pour déterminer pour chaque profondeur, à partir des températures mesurées et des débits mesurés, une valeur de débit, l'ensemble des valeurs obtenues étant enregistré sous la forme d'un profil de débit synthétique.

6. Dispositif selon la revendication 5, caractérisé par le fait que les moyens pour déterminer une valeur de débit comprennent des moyens pour intégrer sur le dit intervalle une équation différentielle reliant, pour chaque profondeur, le débit à la température du fluide et à la température $T_e$ du fluide dans la formation, la résolution étant faite par itération, avec la température $T_e$ en tant que grandeur itérante, le processus d'itération reposant sur la comparaison de la valeur résultant de l'intégration sur l'ensemble de l'intervalle avec la valeur de débit mesurée au sommet de l'intervalle.

7. Dispositif selon la revendication 6, caractérisé par le fait que, si le débit mesuré est nul au bas de l'intervalle, la valeur de départ pour l'intégration est choisie comme une petite fraction de la valeur de débit mesurée au sommet de l'intervalle.

8. Dispositif selon l'une des revendications 6 et 7, caractérisé par le fait que, pour un liquide, l'équation différentielle s'écrit sous la forme

$$\frac{du}{dz} = u \frac{\left(\dfrac{dT}{dz}\right) - \left(\dfrac{dT}{dz}\right)_s}{T - T_e}$$

u étant le débit, T la température du fluide mesurée, $T_e$ la température du fluide dans la formation et $(dT/dz)_s$ le gradient de température dû au transfert thermique entre le puits et la formation, ce gradient étant déterminé à partir des mesures de température dans les zones du dit intervalle où aucun échange notable de fluide ne se produit.

**Patentansprüche**

1. Verfahren zum Bestimmen des Fluiddurchsatzes in einem Bohrloch längs eines Intervalls, das Zonen des Fluidaustauschs zwischen dem Bohrloch und den Formationen umfasst, dadurch gekennzeichnet, dass man mittels einer Diagraphiesonde die Temperatur des Fluids längs dieses Intervalls misst, den Durchsatz an mindestens einem Ende dieses Intervalls misst, und für jede Tiefe, ausgehend von den gemessenen Temperaturen und den gemessenen Durchsätzen, einen Durchsatzwert bestimmt, wobei die Gesamtheit der erhaltenen Werte in Form eines synthetischen Durchsatzprofils aufgezeichnet werden.

2. Verfahren nach Anspruch 1, dadurch gekennzeichnet, dass das synthetische Durchsatzprofil abgeleitet wird durch Integration auf dem genannten Intervall einer Differentialgleichung, die für jede Tiefe den Durchsatz mit der Temperatur des Fluids und der Temperatur $T_e$ des Fluids in der Formation in Beziehung setzt, wobei die Lösung durch Iteration erfolgt mit der Temperatur $T_e$ als Iterationsgrösse, wobei der Iterationsprozess auf dem Vergleich des Wertes beruht, resultierend aus der Integration auf der Gesamtheit des Intervalls, mit dem am oberen Ende des Intervalls gemessenen Durchsatzwert.

3. Verfahren nach Anspruch 2, dadurch gekennzeichnet, dass, falls der gemessene Durchsatz am unteren Ende des Intervalls Null ist, der Ausgangswert für die Integration als ein kleiner Bruchteil des Durchsatzwertes, gemessen am oberen Ende des Intervalls, gewählt wird.

4. Verfahren nach einem der Ansprüche 2 und 3, dadurch gekennzeichnet, dass für eine Flüssigkeit die Differentialgleichung die folgende Form besitzt

$$\frac{du}{dz} = u \ \frac{\left(\dfrac{dT}{dz}\right) - \left(\dfrac{dT}{dz}\right)_s}{T - T_e}$$

worin u der Durchsatz ist, T die gemessene Fluidtemperatur, $T_e$ die Fluidtemperatur in der Formation und $(dT/dz)_s$ der Temperaturgradient infolge thermischen Transfers zwischen dem Bohrloch und der Formation, wobei dieser Gradient bestimmt wird ausgehend von Temperaturmessungen in den Zonen des genannten Intervalls, wo keinerlei merkbarer Austausch des Fluids vorliegt.

5. Vorrichtung zum Bestimmen des Fluiddurchsatzes in einem Bohrloch längs eines Intervalls, das Zonen des Fluidaustauschs zwischen dem Bohrloch und den Formationen (11) umfasst, umfassend Mittel (38) zum Messen der Fluidtemperatur längs dieses Intervalls, Mittel (36) zum Messen des Durchsatzes an mindestens einem Ende dieses Intervalls, dadurch gekennzeichnet, dass sie ferner Mittel (32-34; 50-61; 70-79) umfasst zum Bestimmen, für jede Tiefe, ausgehend von gemessenen Temperaturen und gemessenen Durchsätzen, eines Durchsatzwertes, wobei die Gesamtheit der erhaltenen Werte in Form eines synthetischen Durchsatzprofils aufgezeichnet wird.

6. Vorrichtung nach Anspruch 1, dadurch gekennzeichnet, dass die Mittel zum Bestimmen eines Durchsatzwertes Mittel umfassen zum Integrieren, auf dem genannten Intervall, einer Differentialgleichung, die für jede Tiefe den Durchsatz mit der Fluidtemperatur und der Temperatur $T_e$ von Fluid in der Formation in Beziehung setzt, wobei die Lösung durch Iteration erfolgt mit der Temperatur $T_e$ als Iterationsgrösse, und wobei der Iterationsprozess auf dem Vergleich des aus der Integration auf der Gesamtheit des Intervalls resultierenden Wertes mit dem am oberen Ende des Intervalls gemessenen Durchsatzwert beruht.

7. Vorrichtung nach Anspruch 6, dadurch gekennzeichnet, dass, falls der am unteren Ende des Intervalls gemessene Durchsatz Null ist, der Ausgangswert für die Integration als ein kleiner Bruchteil des Wertes des am oberen Ende des Intervalls gemessenen Durchsatzes gewählt wird.

8. Vorrichtung nach einem der Ansprüche 6 und 7, dadurch gekennzeichnet, dass für eine Flüssigkeit die Differentialgleichung die Form besitzt

$$\frac{du}{dz} = u \ \frac{\left(\dfrac{dT}{dz}\right) - \left(\dfrac{dT}{dz}\right)_s}{T - T_e}$$

wobei u den Durchsatz bezeichnet, T die gemessene Fluidtemperatur, $T_e$ die Fluidtemperatur in der Formation und $(dT/dz)_s$ den Temperaturgradienten infolge thermischen Transfers zwischen dem Bohrloch und der Formation, wobei dieser Gradient bestimmt wird ausgehend von Temperaturmessungen in den Zonen des genannten Intervalls, wo keinerlei merkbarer Austausch des Fluids vorliegt.

**Claims**

1. A method of determining the flow rate of fluid in a well over an interval which includes zones where fluid is exchanged between the well and the formations, characterized by the fact that a logging sonde is used to measure the fluid temperature along said interval, that the flow rate is measured at least at the ends of said interval, and that from measured temperatures and measured flow rates, a flow rate value is determined for each depth, the set of obtained values being recorded in the form of a synthetic flow rate profile.

2. A method according to claim 1, characterized by the fact that the synthetic flow rate profile is obtained by integrating a differential equation over said interval, said equation relating at each depth the flow rate to the temperature of the fluid and to the temperature $T_e$ of the fluid in the formation, the equation being solved by iteration using the temperature $T_e$ as the iterating value, the iteration process relying on a comparison of the value obtained by the integration over the entire interval with the value of the flow rate at the top of the interval.

3. A method according to claim 2, characterized by the fact that, if the measured flow rate at the bottom of the interval is zero, a small fraction of the flow rate measured at the top of the interval is chosen as the starting value for the integration.

4. A method according to claim 2 or 3, characterized by the fact that, for a liquid, the differential equation is written in the form:

$$\frac{du}{dz} = u \ \frac{\left(\dfrac{dT}{dz}\right) - \left(\dfrac{dT}{dz}\right)_s}{T - T_e}$$

where u is the flow rate, T the measured fluid tem-

perature, $T_e$ the temperature of the fluid in the formation and $(dT/dz)_s$ is the temperature gradient due to the transfer of heat between the well and the formation, said gradient being determined from temperature measurements in those zones of said interval in which there is no significant exchange of fluid.

5. A system for determining the flow rate of fluid in a well over an axial interval which includes zones where fluid is exchanged between the well and the formations (11), comprising: means (38) for measuring the fluid temperature along said interval; means (36) for measuring the flow rate at least at the ends of said interval; characterized in that it further comprises means (32-34; 50-61; 70-79) for determining, from measured temperatures and measured flow rates, a flow rate for each depth, the set of obtained values being recorded in the form of a synthetic flow profile.

6. System according to claim 5, characterized in that said means for determining a flow rate value include means for integrating a differential equation over said interval, said equation relating at each depth the flow rate to the temperature of the fluid and to the temperature $T_e$ of the fluid in the formation, the equation being solved by iteration using the temperature $T_e$ as the iterating value, the iteration process relying on a comparison of the value obtained by the integration over the entire interval with the value of the flow rate measured at the top of said interval.

7. System according to claim 6, characterized by the fact that, if the measured flow rate at the bottom of the interval is zero, a small fraction of the flow rate measured at the top of the interval is chosen as the starting value for the integration.

8. System according to claim 6 or 7, characterized by the fact that, for a liquid, the differential equation is in the form:

$$\frac{du}{dz} = u \frac{\left(\dfrac{dT}{dz}\right) - \left(\dfrac{dT}{dz}\right)_s}{T - T_e}$$

where u is the flow rate, T the measured fluid temperature, $T_e$ the temperature of the fluid in the formation and $(dT/dz)_s$ is the temperature gradient due to the transfer of heat between the well and the formation, said gradient being determined from temperature measurements in those zones of said interval in which there is no significant exchange of fluid.

FIG. 1

0 113 285

## FIG. 2

T(z)

FILTRAGE — 50

DERIVATION — 51

dT/dz

3A →

MOYENNE ZONE SUPER. — 52

M

CALCUL ECART_TYPE — 53

S

SOMME — 54

D

MOYENNE GROUPE — 55

$m_i$

DIFFERENCE — 56

$m_i$−D

COMPAR. SIGNES i,i-1 — 57

i = i+1

ENREG. LIMITES DE ZONE — 58

DEFINITION ZONES — 59

CALCUL GRADIENT GEOTH. — 60

ELIMINATION ZONES MINCES — 61

PROFIL DE DEBIT SYNTHETIQUE

ENREGISTR. GRAPH. — 79

ENREGISTR. VALEURS INTEGR. — 78

OUI

CONVERGENCE $.F(IT_i)-U_0 < \varepsilon$ — 77  NON

$U_0$

INTEGRATION — 75

$U_0$

SELECTION ITERANT — 76

COMPAR. SIGNES $F(IT_i)-U_0$ — 74

$U_0$

$F(IT_i)$

INTEGRATION — 72

$U_0$

$IT_i$

SELECTION ITERANT — 73

$IT_A, IT_B$

DEFINITION INTERV. INTERDIT — 71

$a*, T_b*$

CALCUL $(dT/dz)_e$ — 70

13

FIG. 3A

0 113 285

FIG. 3B

0 113 285

17